# EUROPEAN PATENT SPECIFICATION

(11) **EP 1 767 804 B1**
(45) Date of publication and mention of the grant of the patent: **20.02.2008**
(21) Application number: 05425673.0
(22) Date of filing: 27.09.2005
(51) Int. Cl.: F16D 65/00, F16D 65/092

(54) **Disk-brake device with shape memory damping means**
Scheibenbremse mit Formgedächtnis-Dämpfungsmitteln
Frein à disque avec moyens d'amortissement à mémoire de forme

(43) Date of publication of application: 28.03.2007
(73) Proprietor: C.R.F. Società Consortile per Azioni, 10043 - Orbassano (Torino) (IT)
(72) Inventor: Butera, Francesco, 10123 Torini (IT); Alacqua, Stefano, 10090 Rivoli Cascine Vica (Torino) (IT); Capretti, Gianluca, 10043 Orbassano (Torino) (IT)
(74) Representative: Notaro, Giancarlo

(56) References cited:
- FR-A- 2 745 052
- US-A- 5 377 802
- PATENT ABSTRACTS OF JAPAN vol. 1996, no. 12, 26 December 1996 (1996-12-26) -& JP 08 210398 A (TOYOTA MOTOR), 20 August 1996 (1996-08-20)
- PATENT ABSTRACTS OF JAPAN vol. 2002, no. 03, 3 April 2002 (2002-04-03) -& JP 2001 311072 A (HITACHI CHEM CO LTD), 9 November 2001 (2001-11-09)
- PATENT ABSTRACTS OF JAPAN vol. 008, no. 189 (M-321), 30 August 1984 (1984-08-30) -& JP 59 080534 A (AKEBONO BRAKE), 10 May 1984 (1984-05-10)

## Description

The present invention relates to the field of disk brakes or disk clutches. In particular, the invention relates to a disk-brake or disk-clutch device comprising a supporting body, a pad made of friction material, a pad-holder element, on which said pad is mounted and which is mobile with respect to the supporting body, and a piston-operated actuator, which comprises a piston that is mobile with respect to the supporting body for pushing the pad axially against a disk of the brake or of the clutch and in which damping means are moreover associated to said piston.

Damping means are used in order to damp the vibrations that occur during operation when the pad is pressed against the rotating disk and that are accompanied by a troublesome noise.

A device of the type referred to above, equipped with vibration-damping means, is described and illustrated in the document No. WO0127489A1. Said document relates specifically to a disk brake for motor vehicles, in which the damping means are constituted by an anti-vibration mount or silent block made of rubber set between the piston of the actuator and the corresponding supporting body.

The above solution is not, however, fully satisfactory for a series of reasons, amongst which in particular the cost and the corresponding encumbrance of the anti-vibration mount.

A disk brake as set forth in the preamble of claim 1 is known from JP-A-08 210398 and US 5 377 802.

The purpose of the present invention is to provide a device of the type referred to at the beginning of the present description that presents an extremely simple structure, a relatively low cost and reduced overall dimensions and at the same time will guarantee high capacity for damping the vibrations of operation.

With a view to achieving said purpose, the subject of the invention is a device as defined in claim 1.

Shape-memory materials have been known and applied for some time in a wide range of fields. They are typically constituted by metal alloys that have the characteristic of passing from a martensitic state to an austenitic state as the temperature varies beyond a transition value.

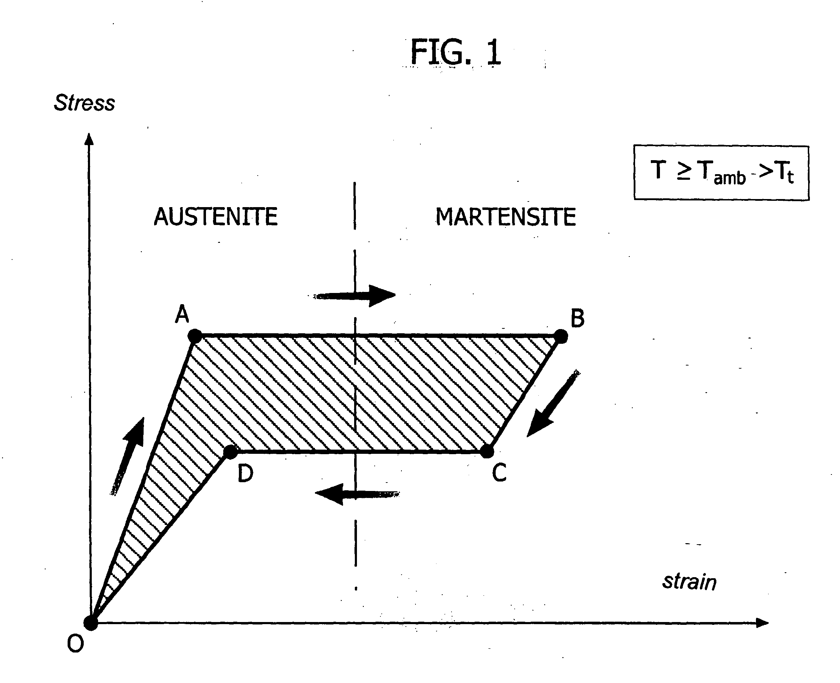

In the austenitic condition, shape-memory metal alloys, which are typically nickel-based and titanium-based alloys, present characteristics of "superelasticity", i.e., they are able to provide elastic absorption of even considerable strains. In said conditions, the shape-memory material presents a stress/strain diagram (see the attached Figure 1) having a relatively extensive hysteresis, which is indicative of relatively high damping capacities. With reference to Figure 1, the diagram illustrated therein relates to a shape-memory alloy that presents a transition temperature lower than the ambient temperature, so that the material is already in an austenitic condition at that temperature or at higher temperatures. In these conditions, a stress applied to the shape-memory element leads initially to a corresponding linear variation of the strain (portion OA of the diagram). As has been said, it is assumed that the temperature T is greater than or equal to the ambient temperature T_{amb}, which in turn is higher than the transition temperature Tₜ of the shape-memory element. As the stress increases beyond the value corresponding to point A of the diagram, there is a further strain of the element, at constant stress, in the course of which there occurs the passage from the austenitic state to the martensitic state.

If, starting from the condition corresponding to point B of the diagram, the stress is reduced, said stress leads to a corresponding strain for a first portion BC, followed by a variation of the strain at constant stress for a portion CD, in which there occurs the return from the martensitic state to the austenitic state, and finally a return of the element to the state of practically zero strain for a final portion DO. As may be seen, the diagram has an extensive area of hysteresis indicative of the damping capacity of the element.

In the preferred embodiment, the shape-memory element is constituted by a plate element, set between the piston-operated actuator and the pad-holder element. Alternatively, it is possible to envisage a pad-holder element made of composite material, with a matrix of any material in which one or more shape-memory elements are integrated.

It should be noted that the use of a shape-memory element in association with a device of operation of a disk brake is known from the document No. JP59080534. Said document, however, shows a shape-memory element constituted by a helical spring, which, with the increase in the temperature due to operation of the brake, is lengthened by pressing of the pad against the disk. Thus configured and arranged, then, the shape-memory element has the function of a device for aiding the piston-operated actuator, which presses the pad positively against the disk. In the case of the present invention, instead, the shape-memory element is set so as not to exert any thrust on the pad, but is simply designed to damp the vibrations transmitted thereto. This is evident when the preferred embodiment is considered, in which the shape-memory element is constituted by a plate parallel to the pad. On the other hand, the shape-memory element of the document No. JP59080534 is not set operatively between the entire surface of the pad and the corresponding actuator so that no capacity for damping the vibrations is possible where the pad-holder element is in direct contact with the corresponding actuator device. It is therefore evident that the cited Japanese document does not anticipate the use, in a disk brake, of a shape-memory element for the purpose of obtaining a damping of the vibrations that occur during operation of the brake.

Further characteristics and advantages of the present invention will emerge from the ensuing description, with reference to the annexed plate of drawings, which are provided purely by way of nonlimiting example and in which:
- Figure 1 illustrates a stress/strain diagram, already discussed above, for the shape-memory element used in the preferred embodiment of the invention; and
- Figure 2 is a schematic cross-sectional view of a disk brake equipped with the device according to the invention.

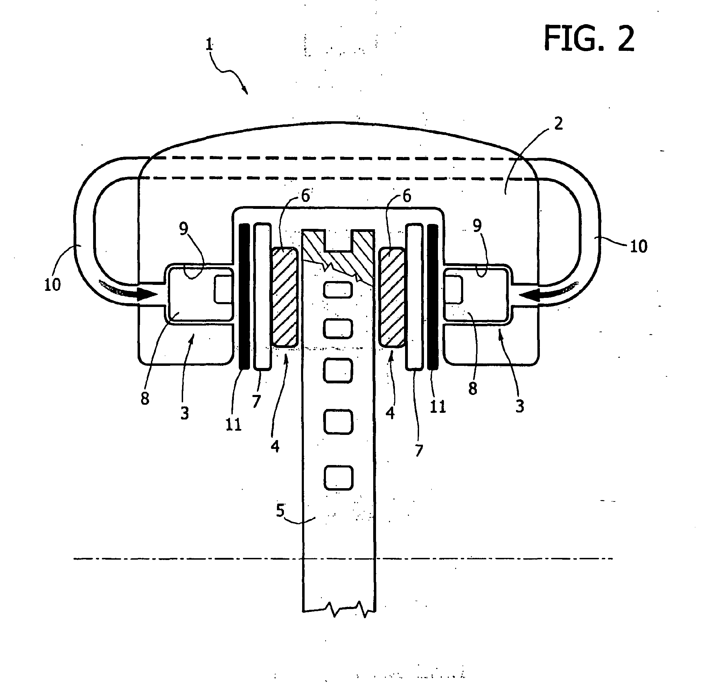

In Figure 2 the reference number 1 designates as a whole a disk-brake calliper for motor vehicles, comprising a supporting body 2 equipped with at least two piston-operated devices 3 for pressing two respective pads 4 in an axial direction, against the opposite faces of the peripheral area of a disk 5 fixed in rotation to the wheel of the motor vehicle. Each pad 4 comprises a gasket 6 made of friction material, carried by a pad-holder element 7, which is subject to the thrust of a piston 8 mounted slidably in a cavity 9 of the body 2. The pistons 8 are pressed against the pad-holder elements 7 by means of pressurized fluid supplied through pipes 10. The details of construction regarding the supporting body 2, the pads 4 and the pad-holder elements 7, the pistons 8, and the corresponding means of supply of pressurized fluid are not illustrated herein since they can be made in any known way.

According to the invention, set between each pad-holder element 7 and the respective actuation piston 8 is a plate 11, which is constituted by a shape-memory material, typically a nickel-based and titanium-based metal alloy.

As may be seen, the shape-memory element is totally set between the respective piston 8 and the respective pad-holder element 4 so as to prevent a direct contact between them.

In operation, the vibrations to which the disk 5 is subjected during braking are damped by each shape-memory element 11. The shape-memory element is shaped and set so as not to exert any pressure in regard to the respective pad-holder element 7, in contrast to what is described in the device known from JP59080534. The function of the element 11 is in fact purely that of damping the vibrations during operation, thus reducing the noise of the brake to the minimum.

In a variant embodiment, one or more shape-memory elements are integrated in the pad-holder element 7 itself, which in this case is constituted by a composite material, with a matrix of any material in which one or more shape-memory elements are englobed.

According to the invention, the shape-memory element is chosen in such a way as to present a transition temperature sensibly lower than the ambient temperature, so that the shape-memory material is already in the austenitic state at ambient temperature or at higher temperatures (at which the device may be as a result of the heat produced during braking). In this way, the shape-memory material presents the characteristics of superelasticity that have been highlighted above with reference to the diagram of Figure 1.

Of course, without prejudice to the principle of the invention, the details of construction and the embodiments may vary widely with respect to what is described and illustrated herein purely by way of example, without thereby departing from the scope of the present invention as defined in the claims.

## Claims

1. A disk-brake or disk-clutch device, comprising:
- a supporting body (2);
- a pad (4) made of friction material;
- a pad-holder element (7), on which the pad (4) is mounted and which is mobile with respect to the supporting body (2); and
- a piston-operated actuator (8), comprising a piston (8), which is mobile with respect to the supporting body (2), for pushing the pad (4) axially against a disk of the brake or of the clutch,
in which associated to said piston (8) are damping means, comprising at least one shape-memory element (11), which passes from a martensitic state to an austenitic state if the temperature increases beyond the element's transition temperature
**characterized in that** said shape-memory element (11) presents a transition temperature lower than the ambient temperature, so that both at ambient temperature and at higher temperatures it is in the austenitic state so as to present characteristics of superelasticity.

2. The device according to Claim 1, **characterized in that** said shape-memory element (11) is in the form of a plate and is set between the piston (9) and the pad-holder element (7) in such a way as to prevent any direct contact between said elements.

3. The device according to Claim 1, **characterized in that** said shape-memory element is integrated in a matrix constituting said pad-holder element (7).

## Patentansprüche

1. Scheibenbremsen- oder Scheibenkupplungsvorrichtung, umfassend:
- ein tragendes Gehäuse (2);
- einen aus einem Reibmaterial bestehenden Bremsbelag (4);
- ein Bremsbelaghalterungselement (7), auf dem der Bremsbelag (4) angebracht wird und der in Bezug auf das tragende Gehäuse (2) beweglich ist; und
- ein kolbenbetätigtes Stellglied (8), umfassend einen Kolben (8), der in Bezug auf das tragende Gehäuse (2) beweglich ist, um den Bremsbelag (4) in axialer Richtung gegen eine Scheibe der Bremse oder der Kupplung zu drücken,
in welchem mit dem Kolben (8) Dämpfungsmittel verbunden sind, umfassend zumindest ein Formgedächtniselement (11), das von einem martensitischen Zustand in einen austenitischen Zustand übergeht, wenn die Temperatur die Umwandlungstemperatur des Elements überschreitet,
**dadurch gekennzeichnet, dass** das Formgedächtniselement (11) eine Umwandlungstemperatur zeigt, die niedriger ist als die Umgebungstemperatur, so dass es sich sowohl bei Umgebungstemperatur als auch bei höheren Temperaturen im austenitischen Zustand befindet, in dem es überelastische Eigenschaften zeigt.

2. Vorrichtung nach Anspruch 1, **dadurch gekennzeichnet, dass** das Formgedächtniselement (11) in Form einer Platte ist und zwischen dem Kolben (9) und dem Bremsbelaghalterungselement (7) eingebaut wird, derart, um einen beliebigen direkten Kontakt zwischen den Elementen zu verhindern.

3. Vorrichtung nach Anspruch 1, **dadurch gekennzeichnet, dass** das Formgedächtniselement in einer das Bremsbelaghalterungselement (7) bildenden Matrix integriert ist.

## Revendications

1. Dispositif de frein à disque ou d'embrayage à disque, comprenant .
- un corps de support (2) ;
- une garniture (4) composée de matériau de friction ;
- un élément de support de garniture (7), sur lequel la garniture (4) est montée et qui est mobile par rapport au corps de support (2) ; et
- un actionneur commandé par piston (8), comprenant un piston (8) qui est mobile par rapport au corps de support (2), pour pousser la garniture (4) axialement contre un disque du frein ou de l'embrayage,
dans lequel des moyens d'amortissement sont associés audit piston (8), comprenant au moins un élément à mémoire de forme (11), qui passe d'un état martensitique à un état austénitique si la température augmente au-delà de la température de transition de l'élément,
**caractérisé en ce que** ledit élément à mémoire de forme (11) présente une température de transition inférieure à la température ambiante, de sorte qu'à la température ambiante et à des températures supérieures il soit à l'état austénitique de manière à présenter des caractéristiques de superélasticité.

2. Dispositif selon la revendication 1, **caractérisé en ce que** ledit élément à mémoire de forme (11) se présente sous la forme d'une plaque et est disposé entre le piston (9) et l'élément de support de garniture (7), de manière à empêcher tout contact direct entre lesdits éléments.

3. Dispositif selon la revendication 1, **caractérisé en ce que** ledit élément à mémoire de forme est intégré dans une matrice constituant ledit élément de support de garniture (7).
